Europäisches Patentamt

(19) **European Patent Office**

**Office européen des brevets**

(11) Numéro de publication: **0 065 431**
A1

(12) # DEMANDE DE BREVET EUROPEEN

(21) Numéro de dépôt: **82400666.2**

(51) Int. Cl.³: **B 60 K 5/12, F 16 F 7/10**

(22) Date de dépôt: **14.04.82**

(30) Priorité: **15.05.81 FR 8109764**

(43) Date de publication de la demande: **24.11.82**
**Bulletin 82/47**

(84) Etats contractants désignés: **AT DE GB IT NL SE**

(71) Demandeur: **AUTOMOBILES PEUGEOT, 75, avenue de la Grande Armée, F-75116 Paris (FR)**
Demandeur: **SOCIETE ANONYME AUTOMOBILES CITROEN, 117 à 167, Quai André Citroen, F-75747 Paris Cedex 15 (FR)**

(72) Inventeur: **Pham, Anh Tuan, 16 rue de Mont-Didier, F-78310 Elancourt (FR)**

(74) Mandataire: **Durand, Yves Armand Louis et al, Cabinet Z. Weinstein 20, Avenue de Friedland, F-75008 Paris (FR)**

(54) **Dispositif de suspension perfectionné.**

(57)   La présente invention concerne un dispositif de suspension perfectionné d'un élément porté à un élément porteur.

Ce dispositif comprend essentiellement un support élastique adhérisé entre deux armatures (2, 5), et une cloison séparatrice et élastique (11) qui porte en son centre un bloc de matière (12) dont la masse est environ 2 à 30 fois supérieure à la masse de la cloison (11), et dont la densité est supérieure à la densité de la cloison (11) et est au moins égale à 5.

Le dispositif de l'invention s'applique par exemple à la suspension d'un moteur dans la caisse d'un véhicule automobile.

-1-

## "Dispositif de suspension perfectionné".-

La présente invention a essentiellement pour objet un dispositif de suspension perfectionné pour véhicules automobiles.

On connaît déjà des dispositifs de suspension destinés à être montés entre deux éléments dont au moins l'un peut être relativement mobile par rapport à l'autre sous l'effet d'excitations diverses.

Ces dispositifs comprenaient généralement au moins un support élastiquement déformable agencé entre un élément porteur et un élément porté de façon à définir une chambre étanche contenant un fluide incompressible, laquelle chambre est partagée en deux par une cloison séparatrice élastique solidaire de l'un desdits éléments et portant un organe constitué par exemple par un bloc de matière représentant une certaine masse et pourvu d'au moins un orifice permettant le passage du fluide d'un côté vers l'autre dudit bloc.

La présente invention a notamment pour but de conférer à l'organe ou bloc précité certaines valeurs de masse et de densité par rapport à la masse et à la densité de la cloison, ce qui procure au dispositif de l'invention des effets et résultats surprenants et avantageux comparativement aux dispositifs de suspension de
l'art antérieur.

Suivant une première caractéristique de l'invention,
la masse du bloc précité est environ deux à trente
fois supérieure à celle de la cloison séparatrice.

On peut déjà dire que cette différence de masse entre
bloc et cloison procure au dispositif de suspension
un fonctionnement très particulier et avantageux
comme on l'expliquera en détail plus loin.

Suivant une autre caractéristique de l'invention, la
densité du bloc précité est supérieure à celle de la
cloison séparatrice et est au moins égale à cinq.

L'invention vise également un véhicule automobile
équipé d'au moins un dispositif de suspension répondant aux caractéristiques susmentionnées.

Mais d'autres caractéristiques et avantages de l'invention apparaîtront plus clairement dans la description
détaillée qui suit et se réfère aux dessins annexés
dans lesquels :

Les figures 1 et 2 illustrent, en coupe axiale, deux
modes de réalisation d'un dispositif de suspension
ou amortisseur conforme aux principes de l'invention,
et

La figure 3 est un diagramme représentant la rigidité
dynamique du dispositif en fonction de la fréquence
des vibrations ou sollicitations transmises par
l'élément porté, qui peut être par exemple le moteur
d'un véhicule automobile.

Un dispositif de suspension conforme à l'invention comprend essentiellement un support 1 élastiquement déformable, par exemple en caoutchouc, adhérisé entre une armature supérieure 2 solidaire en 3 d'un élément porté 4, tel que par exemple le moteur d'un véhicule automobile, et une armature inférieure 5 solidaire en 6 d'un élément porteur 7, tel que par exemple la caisse du véhicule.

Les armatures 2 et 5 ainsi que le support élastique 1 définissent une chambre étanche 8 contenant un fluide incompressible, laquelle chambre est partagée en deux chambres supérieure 9 et inférieure 10 par une cloison séparatrice se composant d'une partie annulaire souple et élastique 11 adhérisée à l'armature supérieure 2 et portant un organe constitué par un bloc 12 de matière représentant une certaine masse et pourvu d'un orifice calibré 13 qui permet le passage du fluide d'un côté vers l'autre dudit bloc en fonction des sollicitations transmises par l'élément porté, comme on le verra plus loin.

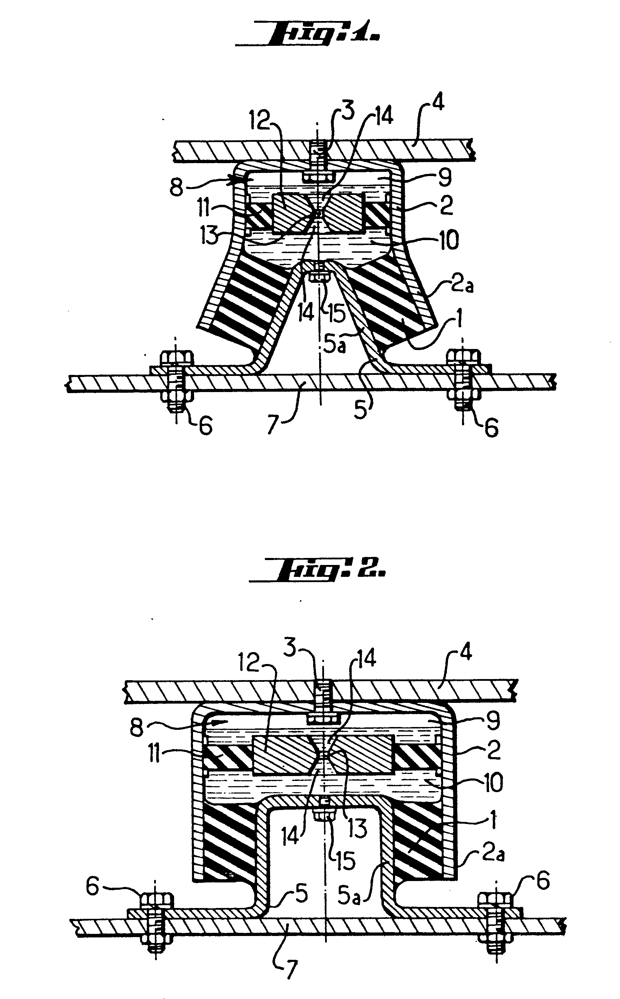

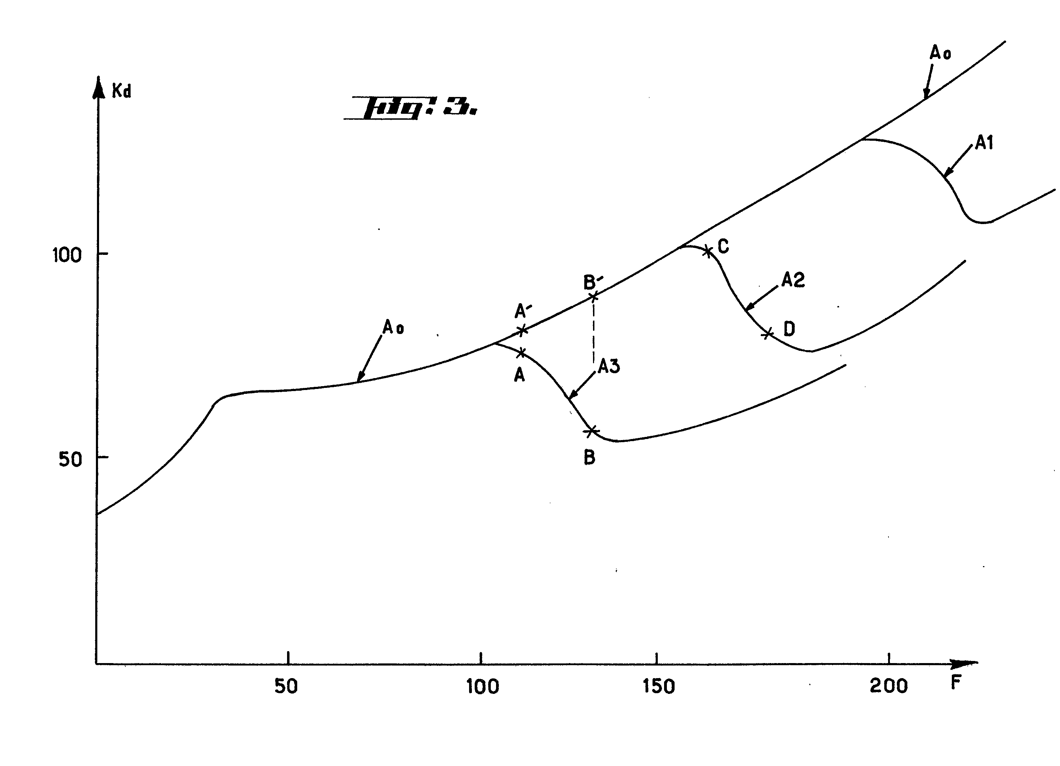

Sur la figure 1, les armatures 2 et 5 présentent une forme sensiblement conique avec des parties correspondantes 2a, 5a, tandis que sur la figure 2, les armatures 2 et 5 présentent une forme sensiblement cylindrique.

Suivant la présente invention, le bloc 12 représente une masse qui est environ 2 à 30 fois supérieure à la masse de la cloison élastique 11. Une telle masse du bloc 12 pourra par exemple, comme on le verra plus loin, atteindre, de préférence, six fois la masse de ladite cloison élastique.

Il faut encore ajouter ici que, selon l'invention, la densité du bloc 12 sera avantageusement supérieure à celle de la cloison 11 et sera par exemple égale à au moins 5.

De cette manière, le dispositif de suspension selon l'invention présentera des avantages nombreux ainsi que des effets surprenants qui seront décrits ci-après en se référant au diagramme de la figure 3 qui représente graphiquement les résultats expérimentaux obtenus avec ledit dispositif comparativement aux dispositifs de l'art antérieur.

Dans ce diagramme, donné uniquement à titre d'exemple, la rigidité dynamique $K_d$ du dispositif (exprimée en décanewtons/millimètre) est représentée en fonction de la fréquence F (Hertz) des vibrations d'un élément porté, tel que l'élément 4 montré sur la figure 1. On notera ici que la rigidité dynamique $K_d$, représentative d'une manière inverse des qualités de filtrage du dispositif, est le rapport de l'effort transmis par l'élément porté au déplacement de ce dernier.

La courbe $A_0$ correspond au fonctionnement d'un dispositif comprenant une cloison élastique et un disque ou analogue central qui possède une masse très petite et relativement très faible par rapport à la masse de la cloison élastique, comme c'est le cas dans les dispositifs de suspension antérieurement connus.

Les courbes repérées $A_1$ , $A_2$ et $A_3$ correspondent au fonctionnement de trois dispositifs de suspension construits, à titre d'exemple, selon les principes de la présente invention et dans lesquels, la cloison élastique 11 dans chaque cas a la même rigidité et une masse qui peut être par exemple d'environ 50 g, tandis que le bloc 12 possède une masse d'environ 100 g (courbe $A_1$), 200 g (courbe $A_2$), et 300 g, (courbe $A_3$).

On voit clairement que pour chacun des trois dispositifs ayant les masses ci-dessus, il existe une fréquence particulière de battement de l'ensemble cloison 11-bloc 12, au-delà de laquelle un déphasage se produit, et ensuite, une diminution de l'effort transmis et de la rigidité dynamique se produit. Par exemple, si l'on se réfère à la courbe $A_3$ qui illustre le fonctionnement d'un dispositif de suspension dans lequel le bloc 12 a une masse de 300 g, on voit que la rigidité dynamique du dispositif décroît brutalement lorsque la fréquence des vibrations de l'élément porté dépasse environ 120 Hz.

Ce résultat est indubitablement avantageux comparativement aux dispositifs de suspension connus représentés par la courbe $A_0$. Plus particulièrement, lorsque l'élément porté 4 vibre à des fréquences élevées, telles que 120 Hz et au-delà, le dispositif amortisseur doit être moins rigide ou moins raide pour pouvoir fonctionner efficacement. Ce but est atteint grâce à la présente invention, comme on le voit sur la figure 3, puisque le dispositif possède une rigidité dynamique plus faible comparativement aux dispositifs connus (courbe $A_0$). Ainsi, le dispositif de suspension doit être souple ou flexible lorsqu'il est soumis à des fréquences élevées, mais il doit être rigide pour des fréquences plus basses afin d'être efficace. En d'autres termes, le dispositif de suspension selon la présente invention satisfait complètement ces exigences.

Revenant au problème des fréquences élevées, si l'on compare les courbes $A_0$ et $A_3$ , on peut dire que la cloison séparatrice se comporte comme un ressort dont la rigidité décroît lorsque la fréquence de l'élément porté augmente (voir portion de courbe AB sur la courbe $A_3$), tandis que le résultat opposé est obtenu avec les suspensions connues (voir portion de courbe A'B' sur la courbe $A_0$). Ceci est dû à la masse substantielle du bloc 12 (par exemple 300 g), qui confère à la cloison élastique 11 une vibration particulière qui est déphasée par rapport à l'élément porté 4. Ce décalage de phase procure une inversion de l'écoulement du fluide au travers de l'orifice calibré 13, c'est-à-dire une sorte de pompage inverse qui diminue les efforts transmis par l'élément porté 4, c'est-à-dire la rigidité  dynamique et les bruits engendrés à haute fréquence.

On notera ici que la fréquence particulière à laquelle la cloison commence à vibrer indépendamment de l'élément porté peut être variable en fonction de la valeur de masse convenable que l'on adoptera pour le bloc 12. Par exemple, si le bloc 12 a une masse de 200 g, la fréquence à laquelle se produira une vibration indépendante, sera d'environ 175 Hz (voir CD sur la courbe $A_2$).

Il est important de noter ici que les résultats ci-dessus n'ont été donnés qu'à titre d'exemple, car ils sont évidemment fonction des dimensions du dispositif de suspension, de la qualité du fluide, de la qualité de l'élastomère utilisé, et également d'autres facteurs.

00654З1

C'est dire que l'invention n'est nullement limitée aux
modes de réalisation décrits et illustrés qui n'ont
été donnés qu'à titre d'exemple.

Au contraire, l'invention comprend tous les équivalents
techniques des moyens décrits ainsi que leurs combinaisons si celles-ci sont effectuées suivant son
esprit et mises en oeuvre dans le cadre de la protection revendiquée ci-après.

Revendications

1.- Dispositif de suspension perfectionné d'un élément porté (4) à un élément porteur (7), du type comprenant au moins un support (1) élastiquement déformable agencé entre lesdits éléments de façon à définir une chambre étanche (8) contenant un fluide incompressible, laquelle chambre est partagée en deux par une cloison séparatrice élastique (11) solidaire de l'un desdits éléments et portant un organe (12) constitué par un bloc de matière représentant une certaine masse et pourvu d'au moins un orifice (13) permettant le passage du fluide d'un côté vers l'autre dudit bloc, caractérisé en ce que la masse dudit bloc (12) est environ 2 à 30 fois supérieure à celle de ladite cloison (11).

2.- Dispositif selon la revendication 1, caractérisé en ce que la densité du bloc précité (12) est supérieure à celle de la cloison (11) et est au moins égale à 5.

3.- Véhicule automobile équipé d'au moins un dispositif de suspension selon la revendication 1 ou 2.

*Fig. 1.*

*Fig. 2.*

Fig: 3.

# Office européen des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | EP-A-0 006 819 (CHRYSLER) | | B 60 K 5/12 <br> F 16 F 7/10 |
| | --- | | |
| A | FR-A-2 435 632 (PAULSTRA) | | |
| | --- | | |
| A | DE-A-2 807 160 (CONTINENTAL GUMMI-WERKE) | | |
| | --- | | |
| A | US-A-3 113 640 (STEDMAN) | | |
| | ----- | | |

### DOMAINES TECHNIQUES RECHERCHES (Int. Cl. 3)

B 60 K 5/12
F 16 F
B 60 G

Le présent rapport de recherche a été établi pour toutes les revendications

| Lieu de la recherche | Date d'achèvement de la recherche | Examinateur |
|---|---|---|
| LA HAYE | 02-06-1982 | ESPEEL R.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82